(19) Europäisches Patentamt
European Patent Office
Office européen des brevets

(11) **EP 3 508 990 A1**

(12) **EUROPEAN PATENT APPLICATION**
published in accordance with Art. 153(4) EPC

(43) Date of publication:
**10.07.2019 Bulletin 2019/28**

(51) Int Cl.:
***G06F 17/30*** (2006.01)

(21) Application number: **17841003.1**

(22) Date of filing: **11.08.2017**

(86) International application number:
**PCT/CN2017/097213**

(87) International publication number:
**WO 2018/033030 (22.02.2018 Gazette 2018/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **19.08.2016 CN 201610697308**

(71) Applicant: **ZTE Corporation**
**Shenzhen, Guangdong 518057 (CN)**

(72) Inventors:
• **NIU, Guoyang**
**Shenzhen**
**Guangdong 518057 (CN)**

• **CHEN, Hong**
**Shenzhen**
**Guangdong 518057 (CN)**
• **WEN, Haijiao**
**Shenzhen**
**Guangdong 518057 (CN)**
• **XU, Man**
**Shenzhen**
**Guangdong 518057 (CN)**

(74) Representative: **Aipex B.V.**
**P.O. Box 30223**
**3001 DE Rotterdam (NL)**

(54) **NATURAL LANGUAGE LIBRARY GENERATION METHOD AND DEVICE**

(57) The embodiments of the present invention provide a natural language library generation method and device. In the embodiments of the present invention, word information is obtained according to a training data set, the word information is converted, using a word vector of a preset dimension, into a test set to be identified, and the test set to be identified is trained in a recursive neural network (RNN) model to generate a natural language library. Thus, the problem, in the existing art, that the construction of the natural language library requires a large amount of manual intervention and that the operation process is relatively complex is solved, thereby achieving the effects of high recognition rate, being easy to use, and meeting the requirements of natural language processing (NLP) services such as a question-answering system, a retrieval system, an expert system, an online customer service, a mobile assistant, and a personal assistant.

FIG. 1

**Description**

**TECHNICAL FIELD**

The embodiments of the present invention relate to the field of computers and, in particular, to a natural language library generation method and device.

**BACKGROUND**

With the development of computers and network technologies, people may encounter applications of artificial intelligence (AI) in daily work and life, and artificial intelligence is closely related to the processing of text words, namely natural language processing (NLP). Further, it is considered that the natural language library based on words (not phrases) is the basis of NLP. Therefore, it is necessary to construct a basic library of words because the basic library can support many tasks of natural language processing, such as spelling correction, input association, sentence determination, dialogue generation.

Today, with the rapid development of big data and artificial intelligence, the text, as an important information carrier, plays an irreplaceable role. Accurate processing of text information, which can improve the service quality of the NLP system and improve user experience, is an important topic in the category of natural language understanding, and needs to be researched imminently.

**SUMMARY**

The embodiments of the present invention provide a natural language library generation method and device, to at least solve the problem, in the existing art, that the construction of a natural language library requires a large amount of manual intervention and that the operation process is relatively complex.

In an aspect of embodiments of the present invention, a natural language library generation method is provided. The method includes:

obtaining word information according to a training data set; converting, using a word vector of a preset dimension, the word information into a test set to be identified; and training the test set to be identified in a recursive neural network (RNN) model to generate a natural language library. In the embodiment of the present invention, obtaining the word information according to the training data set includes: counting a frequency of occurrence of each character in the training data set, where the each character includes at least one of: a word, a number, and a symbol; and sorting a plurality of characters whose frequency of occurrence is greater than a preset threshold in a preset order to obtain the word information.

In the embodiment of the present invention, the RNN model includes: an input layer, one or more hidden layers and an output layer. The input layer is adjacent to the hidden layers and the hidden layers are adjacent to the output layer.

In the embodiment of the present invention, training the test set to be identified in the RNN model to generate the natural language library includes: extracting a number of the hidden layers, a number of neurons of each hidden layer and a training data intercepted length from one or more RNN model parameters configured for the RNN model; computing a number of neurons of the input layer based on the training data intercepted length and the preset dimension; setting a number of neurons of the output layer according to a number of characters included in the word information; and training each character in the test set to be identified, according to the number of the hidden layers, the number of neurons of each hidden layer, the number of neurons of the input layer and the number of neurons of the output layer, to generate the natural language library. In the embodiment of the present invention, after training the test set to be identified in the RNN model to generate the natural language library, the method further includes one of: verifying whether a currently received sentence is abnormal based on the natural language library; and forecasting a character subsequent to the currently received sentence based on the natural language library.

In the embodiment of the present invention, verifying whether the currently received sentence is abnormal based on the natural language library includes: determining a number of characters included in the currently received sentence and a verification direction of the currently received sentence; computing, according to the verification direction of the currently received sentence and based on the natural language library, a probability of each character included in the currently received sentence; and computing a probability of the currently received sentence being normal according to the probability of all the characters included in the currently received sentence.

In the embodiment of the present invention, forecasting a character subsequent to the currently received sentence based on the natural language library includes: determining a number of characters included in the currently received sentence, a verification direction of the currently received sentence, and a number of candidate characters to be forecast; computing, according to the verification direction of the currently received sentence and based on the natural language library, a probability of each character included in the currently received sentence; and computing a probability of occurrence of each candidate character to be forecast according to the probability of all the characters and the number of candidate characters to be forecast.

In another aspect of embodiments of the present invention, a natural language library generation device is provided. The device includes an obtaining module, a conversion module and a generation module.

The obtaining module is configured to obtain word information and a word vector according to a training data set. The conversion module is configured to convert, using a word vector of a preset dimension, the word information into a test set to be identified. The generation module is configured to train the test set to be identified in an RNN model to generate a natural language library.

In the embodiment of the present invention, the obtaining module includes a counting unit, which is configured to count a frequency of occurrence of each character in the training data set, where the each character includes at least one of: a word, a number, and a symbol; and a first obtaining unit, which is configured to sort a plurality of characters whose frequency of occurrence is greater than a preset threshold in a preset order to obtain the word information.

In the embodiment of the present invention, the RNN model includes: an input layer, one or more hidden layers and an output layer. The input layer is adjacent to the hidden layers and the hidden layers are adjacent to the output layer.

In the embodiment of the present invention, the generation module includes: an extraction unit, which is configured to extract a number of the hidden layers, a number of neurons of each hidden layer and a training data intercepted length from one or more RNN model parameters configured for the RNN model; a first computation unit, which is configured to compute a number of neurons of the input layer based on the training data intercepted length and the preset dimension; a setting unit, which is configured to set a number of neurons of the output layer according to a number of characters included in the word information; and a generation unit, which is configured to train each character in the test set to be identified, according to the number of the hidden layers, the number of neurons of each hidden layer, the number of neurons of the input layer and the number of neurons of the output layer, to generate the natural language library.

In the embodiment of the present invention, the above-mentioned device further includes a processing module, which is configured to verify whether a currently received sentence is abnormal based on the natural language library; or forecast a character subsequent to the currently received sentence based on the natural language library.

In the embodiment of the present invention, the processing module includes: a determination unit, which is configured to determine a number of characters included in the currently received sentence and a verification direction of the currently received sentence; a second computation unit, which is configured to compute, according to the verification direction of the currently received sentence and based on the natural language library, a probability of each character included in the currently received sentence; and a third computation unit, which is configured to compute a probability of the currently received sentence being normal according to the probability of all the characters included in the currently received sentence.

In the embodiment of the present invention, the processing module includes: a determination unit, which is configured to determine a number of characters included in the currently received sentence, a verification direction of the currently received sentence, and a number of candidate characters to be forecast; a second computation unit, which is configured to compute, according to the verification direction of the currently received sentence and based on the natural language library, a probability of each character included in the currently received sentence; and a third computation unit, which is configured to compute, a probability of occurrence of each candidate character to be forecast according to the probability of all the characters and the number of candidate characters to be forecast.

Another embodiment among the embodiments of the present invention further provides a storage medium. The storage medium includes stored programs which, when executed, execute the method of any one of the embodiments described above.

In the embodiments of the present invention, the word information is obtained according to the training data set, the word information is converted, using the word vector of the preset dimension, into the test set to be identified; and the test set to be identified is trained in the RNN model to generate the natural language library. Thus, the problem, in the existing art, that the construction of the natural language library requires a large amount of manual intervention and that the operation process is relatively complex is solved, thereby achieving the effect of high recognition rate, being easy to use, and meeting the requirements of NLP services such as a question-answering system, a retrieval system, an expert system, an online customer service, a mobile assistant, and a personal assistant.

## BRIEF DESCRIPTION OF DRAWINGS

The drawings described herein are used to provide a further understanding of the present invention and form a part of the present application. The exemplary embodiments and descriptions thereof in the present invention are used to explain the present invention and not to limit the present invention in any improper way. In the drawings:

FIG. 1 is a flowchart of a natural language library generation method according to an embodiment of the present invention;

FIG. 2 is a schematic diagram of a spelling correction process based on a natural language library according to a preferred embodiment of the present invention;

FIG. 3 is a schematic diagram of an input association process based on a natural language library according to a preferred embodiment of the present invention;

FIG. 4 is a schematic diagram of a sentence determination process based on a natural language library according to a preferred embodiment of the present invention;

FIG. 5 is a schematic diagram of a dialogue generation process based on a natural language library according to a preferred embodiment of the present invention;

FIG. 6 is a flowchart of a natural language library generation device according to an embodiment of the present invention; and

FIG. 7 is a flowchart of a natural language library generation device according to a preferred embodiment of the present invention.

**DETAILED DESCRIPTION**

The present invention will be described hereinafter in detail with reference to the drawings in conjunction with the embodiments. It is to be noted that if not in collision, the embodiments and features therein in the present application may be combined with each other.

It is to be noted that the terms "first", "second" and the like in the description, claims and drawings of the present invention are used to distinguish between similar objects and are not necessarily used to describe a particular order or sequence.

Embodiment 1

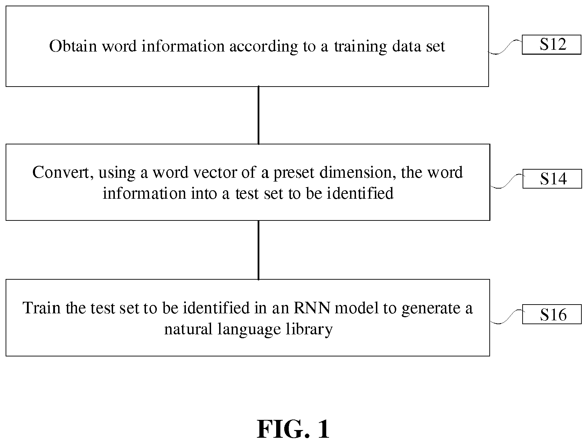

An embodiment of the present invention provides a natural language library generation method. FIG. 1 is a flowchart of the natural language library generation method according to the embodiment of the present invention. As shown in FIG. 1, the process of the method includes the steps described below.

In step S12, word information is obtained according to a training data set.

In step S14, the word information is converted into a test set to be identified using a word vector of a preset dimension.

In step S16, the test set to be identified is trained in a recursive neural network (RNN) model to generate a natural language library.

With the above steps, a method for constructing a natural language library is provided and is mainly provided for the question-answering system, retrieval system, expert system, online customer service, mobile assistant, personal assistant and the like, to process Chines natural language; and is especially suitable for natural language processing (NLP), artificial intelligence (AI), smart question-answering, text mining and other fields. The natural language library provided by the embodiment of the present invention is implemented based on the RNN model of deep learning, which fully utilizes a large amount of information included in the context, and summarizes the relationship between words and words, the relationship between words and sentences, the relationship between words and characters, the relationship between characters and characters and the relationship between words and contexts, to create natural language basic knowledge data for supporting a variety of natural language processing (NLP) tasks. That is to generate a natural language library in a manner of obtaining the word information and word vector according to the training data set and training the training data set, word information, word vector and pre-configured RNN model parameters in the RNN model. Thus, the embodiment solves the problem, in the existing art, that the construction of the natural language library requires a large amount of manual intervention and that the operation process is relatively complex, thereby achieving the effect of less manual intervention, simplicity and efficiency, easy implementation, and high accuracy.

In the preferred implementation process, the RNN model may include: an input layer, one or more hidden layers and an output layer. The input layer is adjacent to the hidden layers and the hidden layers are adjacent to the output layer.

The pre-configured RNN module parameters may include, but is not limited to:

(1) the number I, such as 1=50, of neurons of the input layer;

(2) the number of the hidden layers and the number of neurons included in each hidden layer, for example, currently three hidden layers exist and are respectively H1, H2, and H3, where H1 represents the first hidden layer, H2 represents the second hidden layer, and H3 represents the third hidden layer; and where the hidden layer parameters may be set based on the experience, for example: H1=200, H2=800, H3=3200,...;

(3) the number K of neurons of the output layer, where K may further represent the number of word information, for example, K=5000; and

(4) the training data intercepted length W.

The above training data set may be a large amount of text data. It is assumed that news information published by N (for example, N=200,000) portal websites (for example, Tencent) is selected, and the larger the amount of the news information is, the better.

In the specific implementation process, the selected news information may be segmented, one line for each paragraph; and of course, the selected news information may not be segmented, one line for each article. The results are stored in a data.txt text, in a form described below.

"但是自建自住的如果出租，甚至于也有转让的可能性，不管采取什么形式都有转让." (However, if you rent or even transfer a self-built and self-occupied property, the property is always transferred in a certain form.) "同时亦要求台当局行政院在重大政策出门前，必须寻求党与政的最大共识." (At the same time, it is also required that the Executive Yuan of the Taiwan authorities must seek the greatest consensus of the party and the government before the major policies go out.) "他总是在我身边嚷嚷，我怎么睡得着呢，娄淑元醒来后精神很好." (He is always making a noise beside me, how can I sleep. Shu Shuyuan wakes up and is in good spirits.)

"在油价波动方向不确定、且波动幅度较大的情况下，适当收取燃油附加费是应对油价波动的有效措施." (In the case of uncertain fluctuation direction and large fluctuation of oil price, proper fuel surcharge is an effective measure to deal with fluctuations of oil price.) "超市老板娘潘某也发现钙奶里有一股煤气的味道，于是给小诺换了一瓶." (Ms. Pan, the supermarket owner, also found a smell of gas in the calcium milk and changed another one for Nuo.) "张颖不但自称中央电视台记者，还恐吓他要曝光，并踢了他几脚." (Zhang Ying not only claimed to be a CCTV reporter, but also threatened him to expose and kicked him a few feet.) Optionally, the step S12 in which the word information is obtained according to the training data set may include the steps described below.

In step S121, a frequency of occurrence of each character in the training data set is counted. Each character includes at least one of: a word, a number, and a symbol.

In step S122, a plurality of characters whose frequency of occurrence is greater than a preset threshold is sorted in a preset order to obtain the word information.

The word information (note: not phrase information here) is counted to make preparation for subsequent RNN training and use of the RNN library. Specifically, the training data set is counted, and a total of more than 5,000 commonly used words exist. These words are commonly used simplified Chinese characters, numbers, symbols, and so on.

For convenience, in the following description, the amount of word information is set to be K=5000.

It is assumed that the serial numbers are as described below.

114: "上"(Up) 115: "下" (Down)

116: "不" (No)

117: "与" (And)

118: "且" (And)

119: "丑" (Ugly)

120: "专" (Expert)

......

It should be noted that the number before each word does not refer to the number of word, but the serial number of the word. The serial numbers are arranged in sequence from 0 to the largest. After the serial numbers are determined, the serial number corresponding to each word is unchanged in the process of training and testing.

Since the common Chinese characters are not changed in general and new words are rarely created, once the "word information" here is determined, the "word information" can be used in training the information not only in the medical domain but also in any other domains, such as the domain of communications and the domain of machinery.

The word vector is prepared, has similar principles to the phrase vector, and may be used in the common form in the existing art.

The vector length (that is, the above-mentioned preset dimension) trained here is S. It is assumed that S=50, that is, a 50-dimensional word vector;

The word vector is expressed in a manner described below.

"±" (Up) [0.1525, 0.3658, 0.1634, 0.2510,...]

"下" (Down) [0.1825, 0.2658, 0.1834, 0.2715,...]

In a preferred embodiment of the present invention, the reason for choosing a word vector rather than a phrase vector is that the number of words is relatively small and stable while the number of phrases is relatively large and new phrases are constantly emerging. In particular, when the RNN library is used for "spelling correction", the sentence itself may have typos, which may affect the accuracy of the word segmentation. Therefore, the preferred embodiment of the present invention uses the word vector instead of the phrase vector.

Similarly, since the common Chinese characters are not changed in general and new words are rarely created, once the "word vector" here is determined, the "word vector" can be used in training the information not only in the medical domain but also in any other domains, such as the domain of communications and the domain of machinery.

Optionally, the step S16 in which the test set to be identified is trained in an RNN model to generate a natural language library may include the steps described below.

In step S161, the number of the hidden layers, the number of neurons of each hidden layer and a training data intercepted length are extracted from one or more RNN model parameters configured for the RNN model.

In step S162, the number of neurons of the input layer is computed based on the training data intercepted length and the preset dimension.

In step S163, the number of neurons of the output layer is set according to the number of characters included in the word information.

In step S164, each character in the test set to be identified is trained according to the number of the hidden layers, the number of neurons of each hidden layer, the number of neurons of the input layer and the number of neurons of the output layer, to generate the natural language library. The training data set and the pre-configured RNN model parameters are input into the RNN model, the training is repeated until the parameter change is less than X (the parameter is configurable, for example: X=0.001), and then N weight matrices, namely the library under the RNN model, are obtained through the RNN training. Then the RNN weight matrices are saved as a binary file weight.rnn used for subsequent natural language processing. Of course, in order to improve the accuracy of the library, forward training and backward training are required respectively to obtain two sets of weight coefficients.

Specifically, the embodiment of the present invention provides a library implemented based on the RNN, which is a library based on deep learning (DL).

According to the specific structure of the RNN, it can be determined that the following parts are included.

(1) Input layer

It is assumed that X words are entered, that is, I = X * the dimension of the word vector.

When X is 1 and the dimension of the word vector is 50, 1=50;

When X is 2 and the dimension of the word vector is 50, 1=100.

In a preferred embodiment, the training is performed using a single word, that is, X is 1, and I is 50.

Here, it should be noted that the larger the value of X is, the more accurate the RNN model for training is, and the larger the workload of training is.

(2) Hidden layer

Here the number of hidden layers and the number of neurons of each hidden layer need to be determined.

It is assumed that the RNN model has three hidden layers, and then H1 =200, H2=800, and H3=2000 may be set. H may be set according to experience. In the preferred implementation process, one hidden layer is set, and the number of neurons is H=200.

In addition, it should be noted that the larger the number of hidden layers is, the more accurate the model for training is, and the larger the workload of training is.

(3) Output layer

The number K of neurons in the output layer may be consistent with the amount of word information.

In the preferred implementation process, K is set to be 5000.

The purpose of the above training process is to obtain N pairs of weight matrices, and the value of N is related to the number of hidden layers of the RNN.

When one hidden layer exists, N=3 weight matrices are obtained.

When two hidden layers exist, N=5 weight matrices are obtained.

When three hidden layers exist, N=7 weight matrices are obtained.

It is assumed that one hidden layer is currently set, the number of neurons of the one hidden layer is 200, one input layer is set, the number of neurons of the one input layer is 50, one output layer is set, and the number of neurons of the one output layer is 5000. In addition, the input layer is represented by i, the hidden layer is represented by h, and the output layer is represented by k, from which three weight matrices may be obtained.

(1) A Wih input layer-hidden layer weight matrix is obtained.
(2) A Whk hidden layer-output layer weight matrix is obtained.
(3) A Whh hidden layer-hidden layer weight matrix is obtained.

Since the two-way training is used, the number of weight matrices finally obtained is 2N.

In addition, the word information is used when the RNN computes an error, and the word vector is used when the word of the "training data set" is converted into digital information recognizable by the computer.

Through the above introduction, the neurons of the hidden layer are computed by using a following formula:

$$a_h^t = \sum_{i=1}^{I} w_{ih} x_i^t + \sum_{h'=1}^{H} w_{h'h} b_{h'}^{t-1}$$

$$b_h^t = \theta_h a_h^t$$

$\theta_h$ is an activation function, I is the number of input nodes, and H is the number of neurons in the hidden layer.

The neurons of the output layer are computed by using a following formula:

$$a_k^t = \sum_{h=1}^{H} w_{hk} b_h^t$$

$$b_k^t = \theta_k a_k^t$$

$\theta_k$ is a Softmax function, H is the number of neurons of the hidden layer, and K is the number of neurons of the output layer.

The purpose of repeated training (assuming training for 2000 times) is to obtain N pairs of weight matrices, that is, a W weight file.

The format of the weight file is: P-Q, X-Y, W.

P is the upper-layer neural network sequence number, Q is the lower-layer neural network sequence number, X is the upper-layer neuron sequence number, Y is the lower-layer neuron sequence number, and W is the weight corresponding to the connection between two different neuron sequence numbers in the RNN model.

The corresponding examples are as follows:

0-1, 1-1, 0.3415

0-1, 1-2, 0.5415

0-1, 1-3,0.6415

1-2, 1-1,0.4715

1-2, 1-2,0.5415

1-2, 1-3,0.6415

2-2, 1-1,0.7415

2-2, 1-2, 0.8415

2-2, 1-3, 0.9015

Optionally, after the step S16 in which the test set to be identified is trained in an RNN model to generate a natural language library, the method may further include one of the steps described below.

In step S17, whether a currently received sentence is abnormal is verified based on the natural language library.

In step S18, a character subsequent to the currently received sentence is forecast based on the natural language library.

The natural language library may be used via the "NLP online interface". In other words, natural language processing functions such as spelling correction, input association, sentence determination, dialog generation, and the like may be implemented via the NLP online interface. The NLP online interface may also include: a probability interface and a forecast interface. Messages are sent and received via the two types of interfaces in a respective format as described below.

(1) The message is sent via the "probability interface" in a format listed in Table 1.

Table 1

| Name | Description | Example |
| --- | --- | --- |
| DomainType | Domain | General domain 001; medical domain 002; Telecommunications domain 003 and so on |
| TrainForward | Direction | True denotes forward forecasting and false denotes backward forecasting |
| Sentence | Sentence | The specific sentence to be processed: "你叫什么名字?" (What is your name?) |

(2) The message is returned via the "probability interface" in a format listed in Table 2.

Table 2

| Name | Description | Example |
| --- | --- | --- |
| Probability | Probability of a sentence | Probability, such as 0.4501, of a sentence; |
| Word1Prob | Probability of a word 1 | Probability, such as 0.2536, of the first word |
| Word2Prob | Probability of a word 2 | Probability, such as 0.3536, of the second word |
| Word3Prob | Probability of a word 3 | Probability, such as 0.2736, of the third word |
| ... | ... | ... |
| WordNProb | Probability of a word N | Probability, such as 0.5636, of the Nth word |

(3) The message is sent via the "forecast interface" in a format listed in Table 3.

Table 3

| Name | Description | Example |
| --- | --- | --- |
| DomainType | Domain | General domain 001; medical domain 002; Telecommunications domain 003 and so on |
| TrainForward | Direction | True denotes forward forecasting and false denotes backward forecasting |
| Sentence | Sentence | The specific sentence to be processed: "你叫什么名字'?" (What is your name?) |
| ForecastNum | Forecast number | The number N of words displayed when the next word of the sentence is predicted |

(4) The message is returned via the "forecast interface" in a format listed in Table 4.

Table 4

| Name | Description | Example |
|---|---|---|
| Forecast1 | First word | The next word of the sentence and the probability of this next word; for example: "车" (car) 0.2523 |
| F orecast2 | Second word | The next word of the sentence and the probability of this next word; for example: "人" (person) 0.2323 |
| F orecast3 | Third word | The next word of the sentence and the probability of this next word; for example: "电" (electricity) 0.2023 |
| ... | ... | ... |
| F orecastN | Nth word | The next word of the sentence and the probability of this next word; for example: "学" (study) 0.1923 |

Optionally, the step S17 in which whether a currently received sentence is abnormal is verified based on the natural language library may include the steps described below.

In step S171, the number of characters included in the currently received sentence and a verification direction of the currently received sentence are determined.

In step S172, a probability of each character included in the currently received sentence is computed according to the verification direction of the currently received sentence and based on the natural language library.

In step S173, a probability of the currently received sentence being normal is computed according to the probability of all the characters included in the currently received sentence.

After the natural language library is generated, the probability of each word in the sentence input by the user and the average probability of the entire sentence may be computed based on the natural language library.

For example: "我爱我们的祖国" (I love my mother country).

The probability of each word is respectively:

<我(I) 0.000>, <爱(love) 0. 0624>, <我(my) 0.2563>, <们(our) 0.2652>, <的(of) 0.2514>, <祖 (mother) 0.2145> and <国(country) 0.2145>.

The average probability of the entire sentence is 0.2850.

In the preferred implementation process, the sentence probability is computed via the "probability interface" of the "NLP online interface", and the interaction needs to be performed according to the specified data format.

For example, the sentence input by the user is "我想去商场买双鞋" (I want to go to the mall to buy a pair of shoes), and the message is sent and returned in a respective form described below. The message is sent via the "probability interface" in a format described below.

```
<?xml version="1.0" encoding="utf-8"?>

<RNN>

    <DomainType>001</DomainType>

    <TrainForward>true</TrainForward>

    <Sentence>我想去商场买双鞋</Sentence>

</RNN>
```

The DomainType is a domain type, for example, 001 is a general domain, 002 is a telecommunications domain, 003 is a medical domain and so on. TrainForward is a forecast direction, for example, true is forward forecasting, and false is backward forecasting. Sentence is a sentence to be processed specifically.

The message is returned via the "probability interface" in a format described below.

```
<?xml version="1.0" encoding="utf-8"?>

<RNN>

    <Probability>0.5739</Probability>

    <Word1Prob>我(I):0.0000</Word1Prob>

    <Word2Prob>想(want):0.2051</Word2Prob>

    <Word3Prob>去(go):0.0160</Word3Prob>

    <Word4Prob>商(mall):0.2054</Word4Prob>

    <Word5Prob>厂(factory):0.0021</Word5Prob>

    <Word6Prob>买(buy):0.0115</Word6Prob>

    <Word7Prob>双(a pair of):0.0102</Word7Prob>

    <Word8Prob>鞋(shoes):0.0122</Word8Prob>

</RNN>
```

Probability is the probability of a sentence, that is, the probability of this sentence being correct, and Word1Prob is the normalized probability of a word.

Optionally, the step S18 in which a character subsequent to the currently received sentence is forecast based on the natural language library may include the steps described below.

In step S181, the number of characters included in the currently received sentence, a verification direction of the currently received sentence, and the number of candidate characters to be forecast are determined.

In step S182, a probability of each character included in the currently received sentence is computed according to the verification direction of the currently received sentence and based on the natural language library.

In step S183, a probability of occurrence of each candidate character to be forecast is computed according to the probability of all the characters and the number of candidate characters to be forecast.

After the natural language library is generated, the probability of the next word of the sentence may be predicted according to part of the sentence, that is, the probability of the next word of the sentence may be computed.

For example: "我爱我们的祖(*)" (I love our (*)).

<国(mother country) 0.6012>
<先(ancester) 0.2017>
<宗(forefathers) 0.0254>

Since the library makes full use of the context information of the sentence, the probability statistics varies according to the specific context. The specific examples are as follows.

Example 1: "我大学毕业了，我每天要去上(*)" (I have been graduated and I go to (*) everyday).

<班(work) 0.2412>
<学(school) 0.1017>

Example 2: "我今年八岁了，我每天要去上(*)" (I am already 8 years old and I go to (*) everyday).

<班(work) 0.1016>
<学(school) 0.1517>

Here, it should be noted that in the training process, two directions may be divided into, one is forward, i.e., from left to right and one is backward, from right to left. Two sets of weight matrices are obtained from the two-way training, and the purpose is to improve the accuracy of NLP processing.

In the preferred implementation process, the sentence is forecast via the "forecast interface" of the "NLP online interface", and the interaction also needs to be performed according to the specified data format.

For example, the sentence input by the user is "社会主义国" (socialist), and the message is sent and returned in a respective form described below.

The message is sent via the "forecast interface" in a format described below.

<?xml version="1.0" encoding="utf-8"?>

<RNN>

 <DomainType>001</DomainType>

 <TrainForward>true</TrainForward>

 <Sentence>社会主义国</Sentence>

 <ForecastNum>3</ForecastNum>

</RNN>

The DomainType is a domain type, for example, 001 is a general domain, 002 is a telecommunications domain, 003 is a medical domain and so on. TrainForward is a forecast direction, for example, true is forward forecasting, and false is backward forecasting. Sentence is a sentence to be processed specifically. ForecastNum is the number of words to be forecast, that is, and the forecast value corresponding to the number is displayed.

The message is returned via the "forecast interface" in a format described below.

<?xml version="1.0" encoding="utf-8"?>

<RNN>

 <Forecast1>家(State):0.5802</Forecast1>

 <Forecast1>民(People):0.2051</Forecast1>

 <Forecast1>旗(National flag):0.0160</Forecast1>

</RNN>

Forecast1 is the normalized probability of a word.

Through the above analysis, a natural language library is constructed based on the recursive neural network, that is, the deep learning model of the RNN provides a data support for NLP. The principle is as follows: firstly, the corpus is collected and the RNN model is used for performing the training to get the natural language library under the RNN model; and then the natural language processing is performed based on the natural language library. The natural language processing may include, but is not limited to, spelling correction, input association, sentence determination, and dialogue generation.

The above preferred implementation process will be further described in conjunction with the following preferred embodiments.

Example 1 of use of a library: spelling correction

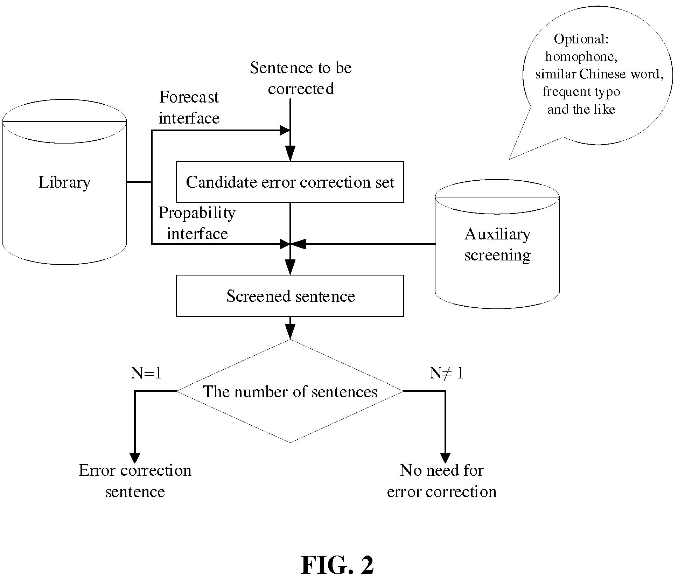

FIG. 2 is a schematic diagram of performing a spelling correction process based on a natural language library according to the preferred embodiment of the present invention. As shown in FIG. 2, in the example of the use of the library, the sentence to be corrected needs to be processed word by word. In the process of processing, the processing may be performed based on the forward and backward libraries respectively. The principles of forward and backward processing are basically the same, and the purpose is to improve the accuracy of error correction.

In the process of natural language processing, backward processing is usually more accurate than forward processing; and in consideration of accuracy being more important than recall, two-way processing is used to improve the accuracy.

For example: "我想去商厂买一双鞋子"(I want to go to the factory to buy a pair of shoes).

When the ith (for example, i=5) word "厂" is processed, three cases may be divided into, namely, replacement, addition, and deletion. The step in which a new word with a high probability is selected and added to the "candidate error correction set" may specifically include the processing steps described below.

In the first step, the ith word is processed, "candidate error correction set" data is generated via the forecast interface, and the operations of addition, deletion and replacement are included. For example, "我想去商<>买一双鞋子" (I want to go to the <*> to buy a pair of shoes).

"我想去商<店>买一双鞋子" (I want to go to the <store> to buy a pair of shoes).

"我想去商<场>买一双鞋子" (I want to go to the <mall> to buy a pair of shoes).

"我想去商厂<门>买一双鞋子" (I want to go to the <mall gate> to buy a pair of shoes).

In the second step, operations in the first step are performed on each word in the sentence, and thereby a complete "candidate error correction set" is obtained.

In the third step, the average probabilities of the sentence in two-way directions are computed, and N (for example, N=30) new sentences with a higher probability are selected.

Here, the sentence having large forward and backward average probabilities is only selected.

In the fourth step, it is assumed that the probability of the sentence with the highest average probability is PI, and the probability of the sentence with the second largest average probability is P2. If PI > P2 + X, the sentence with the probability of PI is an error correction sentence. X is configurable, and X=0.2 may be set according to experience.

Another way of expression is that the probability (P1) of the sentence with the highest probability is much larger than the probability (P2) of the sentence with the second largest probability.

In the fifth step, research results show that homophone errors are very common, and homophones are processed separately in this step.

Specifically, the original word and the N new words are converted into pinyin, and if one homophone new word exists, the sentence is an error correction sentence.

For example: the original sentence is "我想去商厂买一双鞋子" (I want to go to the factory to buy a pair of shoes).

The new sentence is:

"我想去商场买一双鞋子" (I want to go to the mall to buy a pair of shoes)-A; or

"我想去商店买一双鞋子" (I want to go to the store to buy a pair of shoes)-B.

It is generally considered that the sentence A with a homophone is an error corrected sentence. It should be noted that this step is an optional step.

In the sixth step, "similar Chinese words", "frequent typos" and the like may be determined in purpose of auxiliary screening.

In the seventh step, if the "candidate error correction set" is empty, the original sentence is normal, and no error correction is needed; if the "candidate error correction set" has only one piece of data, the piece of data is an error correction sentence; and if the "candidate error correction set" has over two pieces of data, no error correction is required.

It should be noted that for spelling correction, it is considered that the accuracy is more important than the recall. Therefore, when the error correction sentence cannot be determined, the error correction may be decided to be given up first.

Example 2 of use of a library: input association

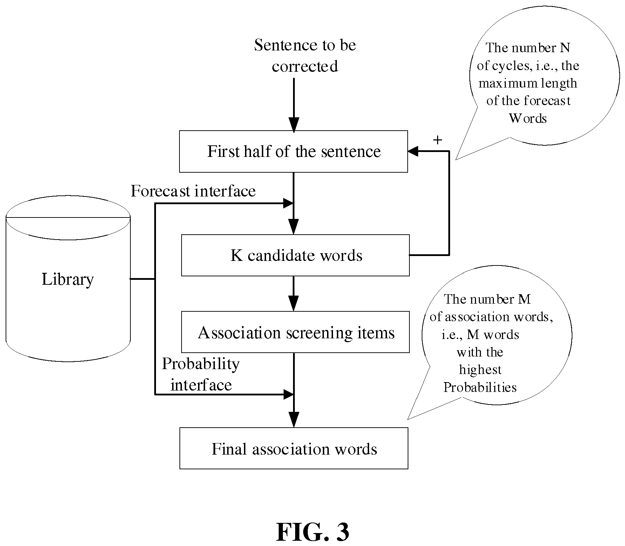

FIG. 3 is a schematic diagram of an input association process based on a natural language library according to a preferred embodiment of the present invention. As shown in FIG. 3, in the example of the use of the library, in order to facilitate the user input, when the user inputs the first half of the sentence, the content of the second half of the sentence is automatically prompted. For example, when the user inputs a sentence "我想买 1000 元左右的电" (I

want to buy a about 1,000 RMB), "视机" (television) or "脑" (computer) is directly prompted. This function may be implemented via the "NLP online interface", and the implementation may include the steps described below.

In a first step, a word subsequent to the "first half of the sentence" is forecast and K words with the highest probabilities are selected.

For example: a word subsequent to the "我想买 1000 元左右的电" (I want to buy a (*) about 1,000 RMB) and the probability of the word are forecast:

<视(television) 0.3>

<脑(computer) 0.28>

<动(electronic game) 0.1>

In a second step, it is determined whether the above sentence reaches the length limit; if the length limit is reached, the next step is proceeded to; and if the length limit is not reached, the current forecast word is added to the "first half of the sentence" and the first step is returned to be performed, for example, "我想买 1000 元左右的电视" (I want to buy a television about 1,000 RMB) is reforecast.

In a third step, the probabilities of all "association screening items" are computed via the "probability interface".

For example:

我想买 1000 元左右的电<脑>(I want to buy a <computer> about 1,000 RMB) 0.6502

我想买 1000 元左右的电<动车>(I want to buy a <electric vehicle> about 1,000 RMB) 0.6421

我想买 1000 元左右的电<视机>(I want to buy a <television> about 1,000 RMB) 0.5241

In a fourth step, M items with the highest probabilities are selected according to the probabilities, to obtain a final association word.

Example 3 of a use of a library: sentence determination

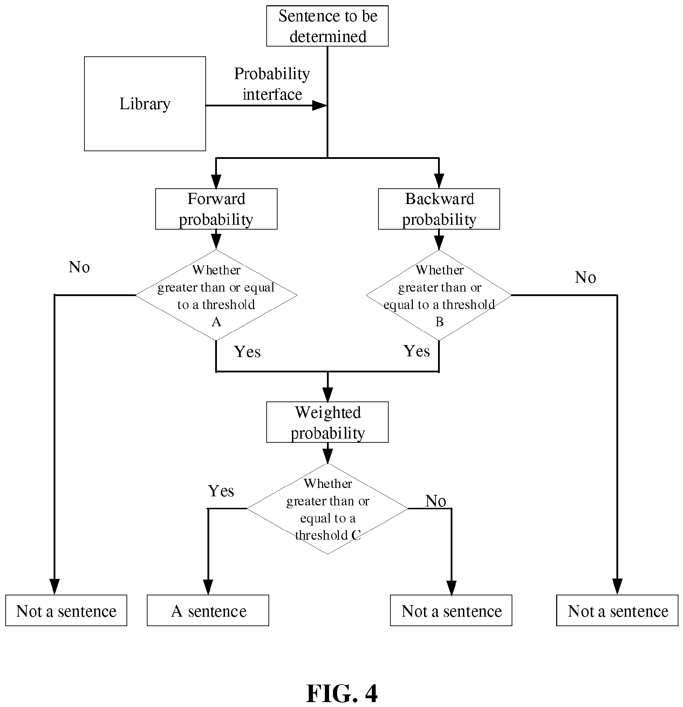

FIG. 4 is a schematic diagram of a sentence determination process based on a natural language library according to a preferred embodiment of the present invention. As shown in FIG. 4, in the NLP processing process, sometimes it is necessary to determine whether a sentence is normal, that is, to perform a sentence determination.

For example, in the smart question-answering system, some users usually input some "non-sentence" sentence to verify the analysis ability of the system. For how to identify these sentences, the "sentence determination" function needs to be used.

It is assumed that the user inputs a sentence "来啊爱的到量开太噢同" (come love open too same). For how to determine whether the sentence is normal, "请说人话" (Please talk normally), "你的表达很深奥啊" (Your expression is very profound) or the like may be replied. The steps described below may be included.

In a first step, the forward probability of the sentence is generated via the "probability interface". If the probability is less than a threshold A, it is determined that the sentence is not normal, and the process ends; otherwise, the next step is performed.

In a second step, the backward probability of the sentence is generated via the "probability interface". If the probability is less than a threshold B, it is determined that the sentence is not normal, and the process ends; otherwise, the next step is performed.

In a third step, a weighted summation operation is performed on the above-generated forward probability and backward probability. If the computed probability is less than a threshold C, it is determined that the sentence is not normal, and the process ends; otherwise, if the computed probability is greater than or equal to the threshold C, it is determined that the sentence is normal, and the process ends.

Example 4 of use of a library: dialogue generation

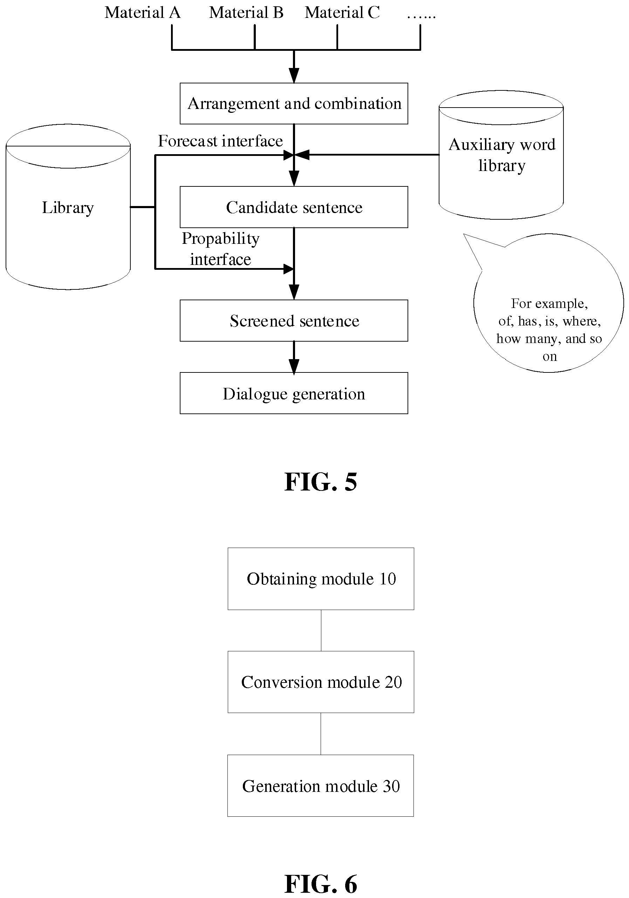

FIG. 5 is a schematic diagram of performing a dialogue generation process based on a natural language library according to a preferred embodiment of the present invention. As shown in FIG. 5, in the NLP processing process, a sentence needs to be generated generally. For example, in the question-answering system, after the intention of the user is understood, a sentence needs to be organized as a reply according to the intention of the user.

For example, "首都北京人口" (population of the Capital Beijing) is input.

The understanding is: "首都" (capital) "北京" (Beijing) "人口" (population) "2000 万" (20 million) are obtained through an inquiry.

A dialogue is generated that the population of the capital Beijing is around 20 million.

The process may specifically include the steps described below.

In a first step, the material needed for the dialogue generation is determined.

For example, the materials are "首都，北京，人口，and 2000 万" (capital, Beijing, population, and 20 million).

In a second step, the materials are arranged and combined.

The result of the arrangement and combination is one of:

"首都，北京，人口，2000 万" (capital, Beijing, population, 20 million)

"北京，首都，人口，2000 万" (Beijing, capital, population, 20 million)

"人口，首都，北京，2000 万" (population, capital, Beijing, 20 million)

"首都，人口，北京，2000 万" (capital, population, Beijing, 20 mission)

In a third step, auxiliary words are added via the "forecast interface" to generate a candidate sentence.

For example:

"首都，的，北京，人口，有，2000 万，左右" (capital, of, Beijing, population, have, 20 million, around)

"北京，首都，的，人口，2000 万" (Beijing, capital, of, population, 20 million)

"人口，首都，是，北京，2000 万" (population, capital, is, Beijing, 20 million)

"首都，人口，有，北京，2000 万，多" (capital, population, Beijing, 20 million, more than)

In a fourth step, a probability of the "candidate sentence" is computed via the "probability interface", and the sentences may be screened according to a preset threshold.

In a fifth step, an appropriate dialogue is selected according to a preset strategy.

For example:

Strategy 1: the dialogue with the highest probability is selected to increase the accuracy of the question-answering.

Strategy 2: different dialogues are selected from the screened sentences to increase the anthropomorphic effect of the question-answering.

Through the above preferred embodiments, the entire natural language library is based on the RNN training model. The relationship between words and words, the relationship between words and sentences, and the relationship between words and the context are all obtained through the training. In order to improve the extendibility of the library, the user may add new domain data or extend the corpus of the original domain. The "NLP online interface" mainly displays the service provided by the library. The service provided by the interface is basic text information. The user may execute different NLP natural language applications, such as spelling correction, input association, sentence determination and dialog generation, based on the basic text information. In addition, the RNN neural network structure is the theoretical basis of the natural language library. The RNN neural network structure can fully utilize the sentence context information to construct the library without manual intervention, thereby greatly reducing the workload of manual operations.

From the description of the embodiments described above, it will be apparent to those skilled in the art that the methods in the embodiments described above may be implemented by software plus a necessary general-purpose hardware platform, or may of course be implemented by hardware. However, in many cases, the former is a preferred implementation mode. Based on this understanding, the solutions provided by the present invention substantially, or the part contributing to the existing art, may be embodied in the form of a software product. The computer software product is stored in a storage medium (such as an ROM/RAM, a magnetic disk or an optical disk) and includes several instructions for enabling a terminal device (which may be a mobile phone, a computer, a server, a network device, or the like) to execute the method according to each embodiment of the present invention.

An embodiment further provides a natural language library generation device. The device is configured to implement the above-mentioned embodiments and preferred embodiments. What has been described will not be repeated. As used below, the term "module" may be software, hardware or a combination thereof capable of implementing predetermined functions. The devices in the embodiments described below are preferably implemented by software, but implementation by hardware or by a combination of software and hardware is also possible and conceived.

An embodiment further provides a natural language library generation device. FIG. 6 is a flowchart of the natural language library generation device according to an embodiment of the present invention. As shown in FIG. 6, the natural language library generation device may include an obtaining module 10, a conversion module 20 and a generation module 30. The obtaining module 10 is configured to obtain word information and a word vector according to a training data set. The conversion module 20 is configured to convert, using a word vector of a preset dimension, the word information into a test set to be identified. The generation module 30 is configured to train the test set to be identified in an RNN model to generate a natural language library.

In the preferred implementation process, the RNN model may include: an input layer, one or more hidden layers and an output layer. The input layer is adjacent to the hidden layers and the hidden layers are adjacent to the output layer.

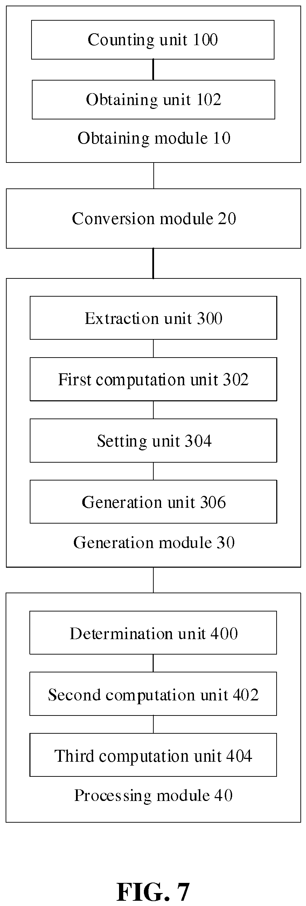

Optionally, FIG. 7 is a flowchart of a natural language library generation device according to a preferred embodiment of the present invention. As shown in FIG. 7, the obtaining module 10 may include a counting unit 100 and an obtaining unit 102. The counting unit 100 is configured to count a frequency of occurrence of each character in the training data set, where each character includes at least one of: a word, a number, and a symbol. The obtaining unit 102 is configured to set all characters whose frequency of occurrence is greater than a preset threshold as the word information.

Optionally, as shown in FIG. 7, the generation module 30 may include an extraction unit 300, a first computation unit 302, a setting unit 304 and a generation unit 306. The extraction unit 300 is configured to extract the number of the hidden layers, the number of neurons of each hidden layer and a training data intercepted length from one or more RNN model parameters configured for the RNN model. The first computation unit 302 is configured to compute the number of neurons of the input layer based on the training data intercepted length and the preset dimension. The setting unit 304 is configured to set the number of neurons of the output layer according to the number of characters included in the word information. The generation unit 306 is configured to train each character in the test set to be identified, according to the number of the hidden layers, the number of neurons of each hidden layer, the number of neurons of the input layer and the number of neurons of the output layer, to generate the natural language library.

Optionally, as shown in FIG. 7, the above-mentioned device may further include a processing module 40, which is configured to verify whether a currently received sentence is abnormal based on the natural language library; or forecast a character subsequent to the currently received sentence based on the natural language library.

Optionally, as shown in FIG. 7, the processing module 40 may include a determination unit 400, a second computation unit 402 and a third computation unit 404. The determination unit 400 is configured to determine the number of characters included in the currently received sentence and a verification direction of the currently received sentence. The second computation unit 402 is configured to compute, according to the verification direction of the currently received sentence and based on the natural language library, a probability of each character included in the currently received sentence. The third computation unit 404 is configured to compute a probability of the currently received sentence being normal according to the probability of all the characters included in the currently received sentence.

Optionally, the processing module 40 may include a determination unit 400, a second computation unit 402 and a third computation unit 404. The determination unit 400 is further configured to determine the number of characters included in the currently received sentence, a verification direction of the currently received sentence, and the number of candidate characters to be forecast. The second computation unit 402 is further configured to compute, according to the verification direction of the currently received sentence and based on the natural language library, a probability of each character included in the currently received sentence. The third computation unit 404 is further configured to compute, a probability of occurrence of each candidate character to be forecast according to the probability of all the characters and the number of candidate characters to be forecast.

It is to be noted that the various modules described above may be implemented by software or hardware. Implementation by hardware may, but not necessarily, be performed in the following manner: the various modules described above are located in a same processor or their respective processors.

Apparently, it is to be understood by those skilled in the art that each of the preceding modules or steps of the embodiments of the present invention may be implemented by a general-purpose computing device, the modules or steps may be concentrated on a single computing device or distributed on a network composed of multiple computing devices, and alternatively, the modules or steps may be implemented by program codes executable by the computing devices, so that the modules or steps may be stored in a storage apparatus and executed by the computing devices. In some circumstances, the illustrated or described steps may be executed in sequences different from those described herein, or the modules or steps may be made into various integrated circuit modules separately, or multiple modules or steps therein may be made into a single integrated circuit module for implementation. In this way, the embodiments of the present invention are not limited to any specific combination of hardware and software.

The above are only preferred embodiments of the present invention and are not intended to limit the present invention. For those skilled in the art, the present invention may have various modifications and variations. Any modifications, equivalent substitutions, improvements and the like made within the spirit and principle of the present invention should fall within the scope of the present invention.

Embodiment 3

An embodiment of the present invention further provides a storage medium. The storage medium includes stored programs which, when executed, execute the method described in any one of the above-mentioned embodiments.
Optionally, in the embodiment, the storage medium may be configured to store program codes for executing steps described below.
In step S1, word information is obtained according to a training data set.
In step S2, the word information is converted, using a word vector of a preset dimension, into a test set to be identified.
In step S3, the test set to be identified is trained in an RNN model to generate a natural language library.
Optionally, the storage medium is further configured to store program codes for executing the steps described below. The step in which the word information is obtained according to the training data set includes the steps described below.
In step S1, a frequency of occurrence of each character in the training data set is counted. Each character includes at least one of: a word, a number, and a symbol.
In step S2, a plurality of characters whose frequency of occurrence is greater than a preset threshold are sorted in a preset order to obtain the word information.
Optionally, in the embodiment, the storage medium may be configured to store program codes for executing steps described below.
In step S1, the RNN model includes: an input layer, one or more hidden layers and an output layer. The input layer is adjacent to the hidden layers and the hidden layers are adjacent to the output layer.
Optionally, in the embodiment, the storage medium may be configured to store program codes for executing the steps described below: the step in which the test set to be identified is trained in the RNN model to generate the natural language library includes steps described below.
In step S1, the number of the hidden layers, the number of neurons of each hidden layer and a training data intercepted length are extracted from one or more RNN model parameters configured for the RNN model.
In step S2, the number of neurons of the input layer is computed based on the training data intercepted length and the preset dimension.
In step S3, the number of neurons of the output layer is set according to the number of characters included in the word information.
In step S4, each character in the test set to be identified is trained according to the number of the hidden layers, the number of neurons of each hidden layer, the number of neurons of the input layer and the number of neurons of the output layer, to generate the natural language library. Optionally, in the embodiment, the storage medium may be configured to store program codes for executing the steps described below: after the step in which the test set to be identified is trained in the RNN model to generate the natural language library, the method further includes one of the steps described below.
In step S1, whether a currently received sentence is abnormal is verified based on the natural language library.
In step S2, a character subsequent to the currently received sentence is forecast based on the natural language library.
Optionally, in the embodiment, the storage medium may be configured to store program codes for executing the steps described below: the step in which whether the currently received sentence is abnormal is verified based on the natural language library includes the steps described below. In step S1, the number of characters included in the currently received sentence and a verification direction of the currently received sentence are determined.
In step S2, a probability of each character included in the currently received sentence is computed according to the verification direction of the currently received sentence and based on the natural language library.
In step S3, a probability of the currently received sentence being normal is computed according to the probability of all the characters included in the currently received sentence.
Optionally, in the embodiment, the storage medium may be configured to store program codes for executing the steps described below: the step in which the character subsequent to the currently received sentence is forecast based on the natural language library includes the steps described below.
In step S1, the number of characters included in the currently received sentence, a verification direction of the currently received sentence, and the number of candidate characters to be forecast are determined.
In step S2, a probability of each character included in the currently received sentence is computed according to the verification direction of the currently received sentence and based on the natural language library.
In step S3, a probability of occurrence of each candidate character to be forecast is computed according to the probability of all the characters and the number of candidate characters to be forecast.

Optionally, in the embodiment, the storage medium may include, but is not limited to, a USB flash disk, a read-only memory (ROM), a random access memory (RAM), a mobile hard disk, a magnetic disk, an optical disk or another medium capable of storing the program codes.

An embodiment of the present invention further provides a processor. The processor is configured for executing programs which, when executed, execute the steps in any one of the above-mentioned methods.

Optionally, in the embodiment, the programs described above are used for executing the steps described below.

In step S1, word information is obtained according to a training data set.

In step S2, the word information is converted, using a word vector of a preset dimension, into a test set to be identified.

In step S3, the test set to be identified is trained in an RNN model to generate a natural language library.

Optionally, in the embodiment, the programs described above are used for executing the steps described below: the step in which the word information is obtained according to the training data set includes steps described below.

In step S1, a frequency of occurrence of each character in the training data set is counted. Each character includes at least one of: a word, a number, and a symbol.

In step S2, a plurality of characters whose frequency of occurrence is greater than a preset threshold are sorted in a preset order to obtain the word information.

Optionally, in the embodiment, the programs described above are used for executing the step described below.

In step S1, the RNN model includes: an input layer, one or more hidden layers and an output layer. The input layer is adjacent to the hidden layers and the hidden layers are adjacent to the output layer.

Optionally, in the embodiment, the programs described above are used for executing the steps described below: the step in which the test set to be identified is trained in the RNN model to generate the natural language library includes steps described below.

In step S1, the number of the hidden layers, the number of neurons of each hidden layer and a training data intercepted length are extracted from one or more RNN model parameters configured for the RNN model.

In step S2, the number of neurons of the input layer is computed based on the training data intercepted length and the preset dimension.

In step S3, the number of neurons of the output layer is set according to the number of characters included in the word information.

In step S4, each character in the test set to be identified is trained according to the number of the hidden layers, the number of neurons of each hidden layer, the number of neurons of the input layer and the number of neurons of the output layer, to generate the natural language library. Optionally, in the embodiment, the programs described above are used for executing the steps described below: after the step in which the test set to be identified is trained in the RNN model to generate the natural language library, the method further include steps described below.

In step S1, whether a currently received sentence is abnormal is verified based on the natural language library.

In step S2, a character subsequent to the currently received sentence is forecast based on the natural language library.

Optionally, in the embodiment, the programs described above are used for executing the steps described below: the step in which whether the currently received sentence is abnormal is verified based on the natural language library includes the steps described below.

In step S1, the number of characters included in the currently received sentence and a verification direction of the currently received sentence are determined.

In step S2, a probability of each character included in the currently received sentence is computed according to the verification direction of the currently received sentence and based on the natural language library.

In step S3, a probability of the currently received sentence being normal is computed according to the probability of all the characters included in the currently received sentence.

Optionally, in the embodiment, the programs described above are used for executing the steps described below: the step in which the character subsequent to the currently received sentence is forecast based on the natural language library includes the steps described below.

In step S1, the number of characters included in the currently received sentence, a verification direction of the currently received sentence, and the number of candidate characters to be forecast are determined.

In step S2, a probability of each character included in the currently received sentence is computed according to the verification direction of the currently received sentence and based on the natural language library.

In step S3, a probability of occurrence of each candidate character to be forecast is computed according to the probability of all the characters and the number of candidate characters to be forecast.

Optionally, for specific examples in the embodiment, reference may be made to the examples described in the above-mentioned embodiments and optional embodiments, and repetition will not be made herein.

Apparently, it is to be understood by those skilled in the art that each of the preceding modules or steps of the embodiments of the present invention may be implemented by a general-purpose computing device, the modules or steps may be concentrated on a single computing device or distributed on a network composed of multiple computing devices, and alternatively, the modules or steps may be implemented by program codes executable by the computing devices, so that the modules or steps may be stored in a storage apparatus and executed by the computing devices. In some circumstances, the illustrated or described steps may be executed in sequences different from those described herein, or the modules or steps may be made into various integrated circuit modules separately, or multiple modules or steps therein may be made into a single integrated circuit module for implementation. In this way, the embodiments of the present invention are not limited to any specific combination of hardware and software.

The above are only preferred embodiments of the embodiments of the present invention and are not intended to limit the embodiments of the present invention. For those skilled in the art, the embodiments of the present invention may have various modifications and variations. Any modifications, equivalent substitutions, improvements and the like made within the principle of the present disclosure are within the scope of the present disclosure.

**INDUSTRIAL APPLICABILITY**

In the embodiments of the present invention, word information is obtained according to a training data set, the word information is converted, using a word vector of a preset dimension, into a test set to be identified, and the test set to be identified is trained in an RNN model to generate a natural language library. Thus, the embodiments achieve the effects of high recognition rate, being easy to use, and meeting the requirements of NLP services such as a question-answering system, a retrieval system, an expert system, an online customer service, a mobile assistant, and a personal assistant.

**Claims**

1. A natural language library generation method, comprising:

   obtaining word information according to a training data set;
   converting, using a word vector of a preset dimension, the word information into a test set to be identified; and
   training the test set to be identified in a recursive neural network, RNN, model to generate a natural language library.

2. The method of claim 1, wherein obtaining the word information according to the training data set comprises:

   counting a frequency of occurrence of each character in the training data set, wherein the each character comprises at least one of: a word, a number, and a symbol; and
   sorting a plurality of characters whose frequency of occurrence is greater than a preset threshold in a preset order to obtain the word information.

3. The method of claim 2, wherein the RNN model comprises: an input layer, one or more hidden layers and an output layer, wherein the input layer is adjacent to the hidden layers and the hidden layers are adjacent to the output layer.

4. The method of claim 3, wherein training the test set to be identified in the RNN model to generate the natural language library comprises:

   extracting a number of the hidden layers, a number of neurons of each hidden layer and a training data intercepted length from one or more RNN model parameters configured for the RNN model;
   computing a number of neurons of the input layer based on the training data intercepted length and the preset dimension;
   setting a number of neurons of the output layer according to a number of characters comprised in the word information; and
   training each character in the test set to be identified, according to the number of the hidden layers, the number of neurons of each hidden layer, the number of neurons of the input layer and the number of neurons of the output layer, to generate the natural language library.

5. The method of claim 4, wherein after training the test set to be identified in the RNN model to generate the natural language library, the method further comprises one of:

   verifying whether a currently received sentence is abnormal based on the natural language library; and

forecasting a character subsequent to the currently received sentence based on the natural language library.

6. The method of claim 5, wherein verifying whether the currently received sentence is abnormal based on the natural language library comprises:

determining a number of characters included in the currently received sentence and a verification direction of the currently received sentence;
computing, according to the verification direction of the currently received sentence and based on the natural language library, a probability of each character included in the currently received sentence; and
computing a probability of the currently received sentence being normal according to the probability of all the characters included in the currently received sentence.

7. The method of claim 5, wherein forecasting a character subsequent to the currently received sentence based on the natural language library comprises:

determining a number of characters included in the currently received sentence, a verification direction of the currently received sentence, and a number of candidate characters to be forecast;
computing, according to the verification direction of the currently received sentence and based on the natural language library, a probability of each character included in the currently received sentence; and
computing a probability of occurrence of each candidate character to be forecast according to the probability of all the characters and the number of candidate characters to be forecast.

8. A natural language library generation device, comprising:

an obtaining module, which is configured to obtain word information according to a training data set;
a conversion module, which is configured to convert, using a word vector of a preset dimension, the word information into a test set to be identified; and
a generation module, which is configured to train the test set to be identified in a recursive neural network, RNN, model to generate a natural language library.

9. The device of claim 8, wherein the obtaining module comprises:

a counting unit, which is configured to count a frequency of occurrence of each character in the training data set, wherein the each character comprises at least one of: a word, a number, and a symbol; and
a first obtaining unit, which is configured to sort a plurality of characters whose frequency of occurrence is greater than a preset threshold in a preset order to obtain the word information.

10. The device of claim 9, wherein the RNN model comprises: an input layer, one or more hidden layers and an output layer, wherein the input layer is adjacent to the hidden layers and the hidden layers are adjacent to the output layer.

11. The device of claim 10, wherein the generation module comprises:

an extraction unit, which is configured to extract a number of the hidden layers, a number of neurons of each hidden layer and a training data intercepted length from one or more RNN model parameters configured for the RNN model;
a first computation unit, which is configured to compute a number of neurons of the input layer based on the training data intercepted length and the preset dimension;
a setting unit, which is configured to set a number of neurons of the output layer according to a number of characters comprised in the word information; and
a generation unit, which is configured to train each character in the test set to be identified, according to the number of the hidden layers, the number of neurons of each hidden layer, the number of neurons of the input layer and the number of neurons of the output layer, to generate the natural language library.

12. The device of claim 11, wherein the device further comprises:
a processing module, which is configured to verify whether a currently received sentence is abnormal based on the natural language library; or forecast a character subsequent to the currently received sentence based on the natural language library.

**13.** The device of claim 12, wherein the processing module comprises:

a determination unit, which is configured to determine a number of characters included in the currently received sentence and a verification direction of the currently received sentence;

a second computation unit, which is configured to compute, according to the verification direction of the currently received sentence and based on the natural language library, a probability of each character included in the currently received sentence; and

a third computation unit, which is configured to compute a probability of the currently received sentence being normal according to the probability of all the characters included in the currently received sentence.

**14.** The device of claim 12, wherein the processing module comprises:

a determination unit, which is configured to determine a number of characters included in the currently received sentence, a verification direction of the currently received sentence, and a number of candidate characters to be forecast;

a second computation unit, which is configured to compute, according to the verification direction of the currently received sentence and based on the natural language library, a probability of each character included in the currently received sentence; and

a third computation unit, which is configured to compute, a probability of occurrence of each candidate character to be forecast according to the probability of all the characters and the number of candidate characters to be forecast.

**15.** A storage medium, comprising stored programs, wherein the method of any one of claims 1 to 7 is executed when the programs are run.

Obtain word information according to a training data set — S12

Convert, using a word vector of a preset dimension, the word information into a test set to be identified — S14

Train the test set to be identified in an RNN model to generate a natural language library — S16

**FIG. 1**

FIG. 2

Sentence to be
corrected

The number N
of cycles, i.e., the
maximum length
of the forecast
Words

First half of the sentence    +

Forecast interface

Library

K candidate words

Association screening items

The number M
of association words,
i.e., M words
with the
highest
Probabilities

Probability
interface

Final association words

# FIG. 3

Sentence to be
determined

Library

Probability
interface

Forward
probability

Backward
probability

No

Whether
greater than or equal
to a threshold
A

Whether
greater than or
equal to a threshold
B

No

Yes

Yes

Weighted
probability

Yes

Whether
greater than or
equal to a
threshold C

No

Not a sentence

A sentence

Not a sentence

Not a sentence

**FIG. 4**

Material A    Material B    Material C    ......

Arrangement and combination

Forecast interface

Library

Auxiliary word library

Candidate sentence

Propability interface

Screened sentence

Dialogue generation

For example, of, has, is, where, how many, and so on

**FIG. 5**

Obtaining module 10

Conversion module 20

Generation module 30

**FIG. 6**

| Counting unit 100 |
|---|

| Obtaining unit 102 |
|---|

Obtaining module 10

| Conversion module 20 |
|---|

| Extraction unit 300 |
|---|

| First computation unit 302 |
|---|

| Setting unit 304 |
|---|

| Generation unit 306 |
|---|

Generation module 30

| Determination unit 400 |
|---|

| Second computation unit 402 |
|---|

| Third computation unit 404 |
|---|

Processing module 40

# FIG. 7

## INTERNATIONAL SEARCH REPORT

| International application No. |
| --- |
| PCT/CN2017/097213 |

### A. CLASSIFICATION OF SUBJECT MATTER

G06F 17/30 (2006.01) i

According to International Patent Classification (IPC) or to both national classification and IPC

### B. FIELDS SEARCHED

Minimum documentation searched (classification system followed by classification symbols)

G06F 17/-

Documentation searched other than minimum documentation to the extent that such documents are included in the fields searched

Electronic data base consulted during the international search (name of data base and, where practicable, search terms used)

CNABS, CNTXT, CNKI, DWPI, SIPOABS: 字, 向量, 循环神经网络, RNN, 训练, 测试, 句, word, character, vector, recurrent neural network, train+, test, sentence

### C. DOCUMENTS CONSIDERED TO BE RELEVANT

| Category* | Citation of document, with indication, where appropriate, of the relevant passages | Relevant to claim No. |
| --- | --- | --- |
| Y | CN 105868184 A (DALIAN UNIVERSITY OF TECHNOLOGY) 17 August 2016 (17.08.2016), claim 1 | 1-3, 8-10, 15 |
| Y | CN 105653671 A (CHANJET INFORMATION TECHNOLOGY COMPANY LTD.) 08 June 2016 (08.06.2016), description, paragraphs [0048] and [0049] | 1-3, 8-10, 15 |
| PX | CN 106372107 A (ZTE CORPORATION) 01 February 2017 (01.02.2017), description, paragraphs [0030]-[0303] | 1-15 |
| A | US 2014249799 A1 (MICROSOFT CORP.) 04 September 2014 (04.09.2014), entire document | 1-15 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 09 November 2017 | 15 November 2017 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer ZHENG, Jiaqing Telephone No. (86-10) 62411684 |
| --- | --- |

Form PCT/ISA /210 (second sheet) (July 2009)

**INTERNATIONAL SEARCH REPORT**
Information on patent family members

| | International application No. |
|---|---|
| | PCT/CN2017/097213 |

| Patent Documents referred in the Report | Publication Date | Patent Family | Publication Date |
|---|---|---|---|
| CN 105868184 A | 17 August 2016 | None | |
| CN 105653671 A | 08 June 2016 | None | |
| CN 106372107 A | 01 February 2017 | None | |
| US 2014249799 A1 | 04 September 2014 | WO 2014137854 A2 | 12 September 2014 |
| | | WO 2014137854 A3 | 23 April 2015 |

Form PCT/ISA/210 (patent family annex) (July 2009)